# EUROPEAN PATENT SPECIFICATION

(11) **EP 3 814 393 B1**
(45) Date of publication and mention of the grant of the patent: **02.11.2022**
(21) Application number: 18924961.8
(22) Date of filing: 28.06.2018
(51) Int. Cl.: C08F 290/14, C08F 2/44, C08F 220/24, G02B 1/04, B29D 11/00, G02C 7/04, C08G 77/18

(54) **ULTRA-HIGH DK MATERIAL**
MATERIAL MIT ULTRAHOHEM DK-WERT
MATÉRIAU À DK ULTRA-ÉLEVÉE

(43) Date of publication of application: 05.05.2021
(73) Proprietor: Acuity Polymers, Inc., Rochester, NY 14615 (US)
(72) Inventor: BONAFINI, James, A., Jr., Kendall, NY 14476 (US)
(74) Representative: Novitas Patent AB
(86) International application number: PCT/US2018/040039
(87) International publication number: WO 2020/005258

(56) References cited:
- US-A- 4 405 773
- US-A- 5 264 878
- US-A1- 2008 291 391
- US-A1- 2008 291 391
- US-A1- 2012 277 342
- US-A1- 2014 362 339
- US-A1- 2014 362 339
- US-A1- 2017 146 823
- US-A1- 2017 146 823

## Description

### TECHNICAL FIELD

The present invention relates to ultra-high gas permeable (Dk) materials and methods of the same; and more particularly to ultra-high Dk materials having Dk values greater than 175; and still more particularly to ultra-high Dk suitable for use as rigid gas permeable contact lenses.

### BACKGROUND OF THE INVENTION

Initially, rigid contact lenses were constructed of poly(methyl methacrylate) and were impermeable to oxygen. As a result, wearers of such lenses would quickly complain of eye fatigue and eye strain due to a lack of oxygen to the cornea. Thus, contact lens science advanced to silicone-based contact lenses, including rigid gas permeable (RGP) contact lenses. US2014362339 discloses a silicone hydrogel soft contact lens, US2008/291391 discloses a hybrid hard-soft contact lens having a substantially rigid center portion and a substantially flexible skirt portion, and CN106749877 discloses a silicone- and fluorine-containing RGP material. US5264878A discloses polymers and the contact lenses made therefrom having a high degree of hardness while at the same time being highly permeable to oxygen.

While RGP contact lenses do afford some degree of oxygen permeability (Dk values of 30-70, with some up to 140-145), wearers continue to cite eye fatigue and eye strain as the day progresses. While wear times have increased, fatigue and strain remain issues as a result of a lack of oxygen to the cornea. Thus, what is needed is a material suitable for use as a RGP lens which exhibits ultra-high oxygen permeability (Dk value greater than 175).

Oxygen for aerobic corneal metabolism is derived principally from the atmosphere. Therefore, the physiologic integrity of the cornea during wear of a gas-permeable soft or rigid contact lens is thought to be primarily dependent on the consumption of oxygen that passes through the lens. Prediction of the physiologic performance of a contact lens on the eye, therefore, requires an index that allows the oxygen passage through the lens to be estimated.

In 1971, Fatt and St. Helen applied Fick's Law to the problem of oxygen passage through contact lenses, thereby bringing to the field the concept of oxygen transmissibility (*Dk*/*t*). This bench-top measurement has been used extensively as a basis for comparison of contact lenses. However, as Fatt has pointed out, the *Dk*/*t* term used by itself as a measure of lens performance has been "a disappointment." The *Dk*/*t* coefficient gives a measure of the "ease" with which oxygen can diffuse through a lens; however, oxygen passage through a contact lens in a given scenario is also dependent on the driving force-that is, the partial pressure difference-across the lens. Oxygen flux (*j*) is the true index of the amount of oxygen that passes through a unit area of lens in a given time.

### SUMMARY OF THE INVENTION

In accordance with an aspect of the present invention, a method of producing an ultra-high Dk material comprises contacting and reacting: a fluoroalkyl methacrylate; an alkyl glycol dimethacrylate; a hydrophilic agent, such as methacrylic acid; a hydroxyalkyl tris(trimethylsiloxy)silane; a hydroxyalkyl terminated polydimethylsiloxane; and styrylethyltris(trimethylsiloxy)silane. The reaction is conducted within an inert atmosphere at a pressure of at least 172 kPa (25 pounds per square inch (PSI) ) for a period of time and at a temperature sufficient to produce the ultra-high Dk material. By way of example, the fluoroalkyl methacrylate may be hexafluoroisopropyl methacrylate; the alkyl glycol dimethacrylate may be neopentyl glycol dimethacrylate; the hydroxyalkyl tris(trimethylsiloxy)silane may be 3-methacryloyloxypropyl tris(trimethylsiloxy)silane; and the hydroxyalkyl terminated polydimethylsiloxane may be 4-methacryloxybutyl terminated polydimethylsiloxane. The styrylethyltris(trimethylsiloxy)silane may comprise 14% of the material, by weight. The resultant material has a Dk value greater than 175.

In accordance with an aspect of the present invention, the reaction is conducted under a nitrogen, argon or helium atmosphere and is conducted between 172 kPa and 6985 kPa (25psi and 1,000psi) (pounds per square inch). The reaction may be conducted within a thermostatically-controlled oven. Reaction temperate may be at room temperature (20°C-25°C) or at an elevated temperature, such as up to 50°C. The oven may also be programmable to allow for variable temperature control over the course of the reaction. The reaction is further conducted within a vessel wherein the ultra-high Dk material is formed in the shape of the vessel. In one aspect, the high Dk material is formed as a blank or rod. The vessel may be constructed of a vessel material that is permeable to the inert gas comprising the inert atmosphere, such as polypropylene or polytetrafluoroethylene.

### DETAILED DESCRIPTION

Polymerization of suitable monomeric reagents under high pressure may produce polymeric materials with an increase in oxygen permeability over reactions conducted at ambient pressure. When using starting monomers having high oxygen affinities, the increase in oxygen permeability may be even more pronounced. As a result, materials having ultra-high Dk values may be produced. As used herein, the term "ultra-high Dk" refers to materials having a Dk value greater than 175. To that end, polymerization reactions in accordance with the present invention are conducted under high pressure (at least 172 kPa (25psi) ) within a thermostatically-controlled oven at room temperature. "Room temperature" may be anywhere between 20°C and 25°C. In accordance with a further aspect of the present invention, the polymerization reactions may be conducted at pressures higher than 172 kPa (25 psi), including up to 6895 kPa (1000psi) and/or higher temperatures, such as up to 50°C. Higher oxygen permeabilities may be realized as the reaction pressure increases. Moreover, the polymerization reactions should be conducted in an inert atmosphere, such as, and without limitation thereto, a nitrogen, helium and/or argon atmosphere. Without being tied to any particular theory, it is believed that the ultra-high Dk polymer materials are formed as a xerogel or xerogel-like material. It is further believed that the inert gas acts like a solvent and once the polymer network is formed, the inert gas is replaced by ambient gases thereby forming a microporous structure. In a further aspect of the invention, the ultra-high Dk polymer materials may be produced under super critical fluid conditions. It is thus believe that the rigidity of the polymer network acquired through use of specific monomers and crosslinkers prevents collapse of the microporous structure.

In accordance with an aspect of the present invention, a non-limiting exemplary ultra-high Dk formulation is shown in Table 1:

**TABLE 1**

| **Component** | **Weight %** | **CAS Number** |
|---|---|---|
| Hexafluoroisopropyl methacrylate | 42.0 | 3063-94-3 |
| Neopentyl glycol dimethacrylate | 7.0 | 1985-51-9 |
| Methacrylic acid | 7.0 | 79-41-4 |
| 3-Methacryloyloxypropyl tris(trimethylsiloxy)silane | 19.0 | 17096-07-0 |
| 4-methacryloxybutyl terminated polydimethylsiloxane | 11.0 | 58130-03-3 |
| styrylethyltris(trimethylsiloxy)silane | 14.0 | NA |
| | | |
| TOTAL | 100.0 | |

It should be noted that the weight percentage of styrylethyltris(trimethylsiloxy)silane (7% - 20%, and more particularly, 14%) combined with the polymerization under high pressure (at least 172 kPa (25 psi)) is critical to the production of the ultra-high Dk material. It is believed that the styrylethyltris(trimethylsiloxy)silane helps create a high free-volume structure and is synergistic with the 3-methacryloyloxypropyl tris(trimethylsiloxy)silane.

In accordance with a further aspect of the present invention, a method of producing an ultra-high Dk material comprises contacting and reacting: a fluoroalkyl methacrylate; an alkyl glycol dimethacrylate; a hydrophilic agent, such as methacrylic acid; a hydroxyalkyl tris(trimethylsiloxy)silane; a hydroxyalkyl terminated polydimethylsiloxane; and styrylethyltris(trimethylsiloxy)silane. By way of example and without limitation thereto, the fluoroalkyl methacrylate may be hexafluoroisopropyl methacrylate; the alkyl glycol dimethacrylate may be neopentyl glycol dimethacrylate; the hydroxyalkyl tris(trimethylsiloxy)silane may be 3-methacryloyloxypropyl tris(trimethylsiloxy)silane; and the hydroxyalkyl terminated polydimethylsiloxane may be 4-methacryloxybutyl terminated polydimethylsiloxane. The reaction is conducted within an inert atmosphere (e.g., nitrogen, argon or helium) at a pressure of at least 172 kPa (25 psi) for a period of time and at a temperature sufficient to produce the ultra-high Dk material. As discussed above, the reaction may be conducted at room temperature, e.g., between 20°C and 25°C, or at an elevated temperature, such as up to 50°C, and under pressures between 172 kPa and 6895 kPa (25 psi and 1000 psi). As a result, the ultra-high Dk material may have a Dk value greater than 175, with reactions conducted at higher pressures yielding materials with higher Dk values. Additionally, an ultra-high Dk material in accordance with the present invention may have relatively low silicon content, and thereby avoid surface wetting problems encountered with high silicon gas permeable materials. As a result, the ultra-high Dk materials produced in accordance with the present invention do not require surface treatments, such as plasma treatments.

The polymerization reaction may be conducted within a vessel wherein the internal dimensions and geometry correspond to the desired size and shape of the ultra-high Dk material. That is, the ultra-high Dk material will polymerize within the vessel in the shape of the void of the vessel. The vessel may be constructed of a material, such as polypropylene or polytetrafluoroethylene (PTFE), that is permeable to the inert gas comprising the inert atmosphere. In accordance with an aspect of the invention, the vessel may reside with a thermostatically-controlled oven set at a specific temperature, such as between 20°C and 50°C, or the oven may be programmable so as to permit reactions with variable temperature profiles.

By way of example, an ultra-high Dk material produced in accordance with an aspect of the present invention may be used to fabricate rigid gas permeable (RGP) contact lenses. In this non-limiting example, the high Dk material may be formed as a lens, blank or rod having a diameter between 7mm and 28mm. The blanks may have heights between about 2mm and 15mm while the rods may have any desired heights. The diameter of the rod or blank may be selected in accordance with its intended use. For instance, traditional RGP contact lenses have diameters between about 7mm to 12mm (typically between 9mm and 10mm) while scleral lenses have larger diameters between about 14mm to 24mm (typically between 15mm and 20mm). The ultra-high Dk material blanks and rods may then be shaped through a lathing process to produce the desired lens, as is known in the art. Alternately, lenses may be cast directly under the described conditions.

## Claims

1. A method of producing an ultra-high Dk material which comprises contacting and reacting:
a) a fluoroalkyl methacrylate;
b) an alkyl glycol dimethacrylate;
c) a hydrophilic agent;
d) a methacryl functional tris(trimethylsiloxy)silane;
e) a methacryl functional terminated polydimethylsiloxane; and
f) styrylethyltris(trimethylsiloxy)silane,
the reaction being conducted within an inert atmosphere at a pressure of at least 172 kPa (25 pounds per square inch (PSI)) and for a period of time and at a temperature sufficient to produce the ultra-high Dk material.

2. The method of claim 1 wherein the fluoroalkyl methacrylate is hexafluoroisopropyl methacrylate; the alkyl glycol dimethacrylate is neopentyl glycol dimethacrylate; the methacryl functional tris(trimethylsiloxy)silane is 3-methacryloyloxypropyl tris(trimethylsiloxy)silane; the methacryl functional terminated polydimethylsiloxane is 4-methacryloxybutyl terminated polydimethylsiloxane; the hydrophilic agent is methacrylic acid.

3. The method of claim 1 wherein the styrylethyltris(trimethylsiloxy)silane comprises between 7% and 20% of the material, by weight.

4. The method of any one of claims 1 to 3 wherein the styrylethyltris(trimethylsiloxy)silane constitutes 14% of the material, by weight.

5. The method of claim 1 wherein the reaction is conducted under a nitrogen, argon or helium atmosphere.

6. The method of claim 1 wherein the reaction is conducted between 172 kPa and 6895 kPa (25 psi and 1,000psi).

7. The method of claim 1 wherein the reaction is conducted within a vessel wherein the ultra-high Dk material is formed in the shape of the vessel.

8. The method of claim 7 wherein vessel is selected whereby the ultra-high Dk material is formed as a lens, blank or rod.

9. The method of claim 7 wherein the vessel is constructed of a vessel material that is permeable to the inert gas comprising the inert atmosphere.

10. The method of claim 9 wherein the vessel is constructed of polypropylene or polytetrafluoroethylene.

11. The method of claim 1 wherein the reaction is conducted at room temperature.

12. The method of claim 1 wherein the reaction is conducted above room temperature.

13. An ultra-high Dk material produced according to the method of claim 1.

## Patentansprüche

1. Verfahren zum Herstellen eines Materials mit ultrahohem Dk-Wert, das Inkontaktbringen und Umsetzen umfasst von:
a) einem Fluoralkylmethacrylat;
b) einem Alkylglykoldimethacrylat;
c) einem hydrophilen Mittel;
d) einem methacrylfunktionellen Tris(trimethylsiloxy)silan;
e) einem methacrylfunktionell terminierten Polydimethylsiloxan; und
f) Styrylethyltris(trimethylsiloxy)silan,
wobei die Reaktion innerhalb einer inerten Atmosphäre bei einem Druck von mindestens 172 kPa (25 Pfund pro Quadratzoll (PSI)) und für einen Zeitraum und bei einer Temperatur durchgeführt wird, die ausreichen, um das Material mit ultrahohem Dk-Wert herzustellen.

2. Verfahren nach Anspruch 1, wobei das Fluoralkylmethacrylat Hexafluorisopropylmethacrylat ist; das Alkylglykoldimethacrylat Neopentylglykoldimethacrylat ist; das methacrylfunktionelle Tris(trimethylsiloxy)silan 3-Methacryloyloxypropyltris(trimethylsiloxy)silan ist; das methacrylfunktionell terminierte Polydimethylsiloxan 4-Methacryloxybutylterminiertes Polydimethylsiloxan ist; das hydrophile Mittel Methacrylsäure ist.

3. Verfahren nach Anspruch 1, wobei das Styrylethyltris(trimethylsiloxy)silan zwischen 7 Gew.-% und 20 Gew.-% des Materials ausmacht.

4. Verfahren nach einem der Ansprüche 1 bis 3, wobei das Styrylethyltris(trimethylsiloxy)silan 14 Gew.-% des Materials konstituiert.

5. Verfahren nach Anspruch 1, wobei die Reaktion unter einer Stickstoff-, Argon- oder Heliumatmosphäre durchgeführt wird.

6. Verfahren nach Anspruch 1, wobei die Reaktion zwischen 172 kPa und 6895 kPa (25 psi und 1.000 psi) durchgeführt wird.

7. Verfahren nach Anspruch 1, wobei die Reaktion innerhalb eines Gefäßes durchgeführt wird, wobei das Material mit ultrahohem Dk-Wert in der Form des Gefäßes gebildet wird.

8. Verfahren nach Anspruch 7, wobei Gefäß ausgewählt wird, womit das Material mit ultrahohem Dk-Wert als eine Linse, ein Rohling oder Stab gebildet wird.

9. Verfahren nach Anspruch 7, wobei das Gefäß aus einem Gefäßmaterial konstruiert ist, das für das Inertgas, das die inerte Atmosphäre ausmacht, durchlässig ist.

10. Verfahren nach Anspruch 9, wobei das Gefäß aus Polypropylen oder Polytetrafluorethylen konstruiert ist.

11. Verfahren nach Anspruch 1, wobei die Reaktion bei Raumtemperatur durchgeführt wird.

12. Verfahren nach Anspruch 1, wobei die Reaktion oberhalb Raumtemperatur durchgeführt wird.

13. Material mit ultrahohem Dk-Wert, das nach dem Verfahren nach Anspruch 1 hergestellt ist.

## Revendications

1. Procédé de production d'un matériau à Dk ultra-élevé qui comprend la mise en contact et la réaction :
a) d'un méthacrylate de fluoroalkyle ;
b) d'un diméthacrylate d'alkyl-glycol ;
c) d'un agent hydrophile ;
d) d'un tris(triméthylsiloxy)silane à fonctionnalité méthacryle ;
e) d'un polydiméthylsiloxane à terminaison fonctionnelle méthacryle ; et
f) d'un styryléthyltris(triméthylsiloxy)silane,
la réaction étant effectuée au sein d'une atmosphère inerte à une pression d'au moins 172 kPa (25 livres par pouce carré (PSI)) et pendant une période de temps et à une température suffisantes pour produire le matériau à Dk ultra-élevé.

2. Procédé selon la revendication 1 dans lequel le méthacrylate de fluoroalkyle est du méthacrylate d'hexafluoro-isopropyle ; le diméthacrylate d'alkyl-glycol est du diméthacrylate de néopentyl-glycol ; le tris(triméthylsiloxy)silane à fonctionnalité méthacryle est du 3-méthacryloyloxypropyl-tris(triméthylsiloxy)silane ; le polydiméthylsiloxane à terminaison fonctionnelle méthacryle est du polydiméthylsiloxane à terminaison 4-méthacryloxybutyle ; l'agent hydrophile est de l'acide méthacrylique.

3. Procédé selon la revendication 1 dans lequel le styryléthyltris(triméthylsiloxy)silane constitue entre 7 % et 20 % du matériau, en poids.

4. Procédé selon l'une quelconque des revendications 1 à 3 dans lequel le styryléthyltris(triméthylsiloxy)silane représente 14 % du matériau, en poids.

5. Procédé selon la revendication 1 dans lequel la réaction est effectuée sous une atmosphère d'azote, d'argon ou d'hélium.

6. Procédé selon la revendication 1 dans lequel la réaction est effectuée entre 172 kPa et 6895 kPa (25 psi et 1000 psi).

7. Procédé selon la revendication 1 dans lequel la réaction est effectuée au sein d'un récipient dans lequel le matériau à Dk ultra-élevé est formé sous la forme du récipient.

8. Procédé selon la revendication 7 dans lequel on sélectionne le récipient par lequel le matériau à Dk ultra-élevé est formé en tant que lentille, ébauche ou tige.

9. Procédé selon la revendication 7 dans lequel le récipient est construit dans un matériau de récipient qui est perméable au gaz inerte constituant l'atmosphère inerte.

10. Procédé selon la revendication 9 dans lequel le récipient est construit en polypropylène ou en polytétrafluoroéthylène.

11. Procédé selon la revendication 1 dans lequel la réaction est effectuée à la température ambiante.

12. Procédé selon la revendication 1 dans lequel la réaction est effectuée au-dessus de la température ambiante.

13. Matériau à Dk ultra-élevé produit selon le procédé de la revendication 1.
